# EUROPÄISCHE PATENTSCHRIFT

(11) **EP 2 152 532 B1**
(45) Veröffentlichungstag und Bekanntmachung des Hinweises auf die Patenterteilung: **17.07.2013**
(21) Anmeldenummer: 08758458.7
(22) Anmeldetag: 09.05.2008
(51) Int. Cl.: B60H 1/00

(54) **VORRICHTUNG ZUM STEUERN VON LUFTSTRÖMEN**
DEVICE FOR CONTROLLING AIR FLOWS
DISPOSITIF DE COMMANDE DE FLUX D'AIR

(30) Priorität: 24.05.2007 DE 102007024632
(43) Veröffentlichungstag der Anmeldung: 17.02.2010
(73) Patentinhaber: Behr GmbH & Co. KG, 70469 Stuttgart (DE)
(72) Erfinder: ROSS, Reinhold, 71701 Schwieberdingen (DE); LINDAUER, Sascha, 73553 Alfdorf (DE); OTZELBERGER, Norbert, 70376 Stuttgart (DE); MÜHLEISEN, Harald, 70771 Leinfelden -Echterdingen (DE)
(74) Vertreter: Grauel, Andreas
(86) Internationale Anmeldenummer: PCT/EP2008/003785
(87) Internationale Veröffentlichungsnummer: WO 2008/141745

(56) Entgegenhaltungen:
- EP-A- 0 414 941
- DE-A1- 4 420 160
- DE-A1- 19 928 834
- FR-A- 2 752 775
- US-A- 5 338 249

## Beschreibung

Die vorliegende Erfindung betrifft eine Vorrichtung zur Verteilung und / oder zum Steuern von Luftströmen, insbesondere in einer Klimaanlage eines Kraftfahrzeugs.

Der Betrieb einer Klimaanlage erfordert je nach gewünschter Temperatur, die im Innenraum eines Kraftfahrzeugs erzielt werden soll, eine Behandlung der angesaugten Außenluft, die in der Regel mittels Wärmetauscher und Verdampfer erfolgt. Die klimatisch aufbereitete Luft wird dann dem Innenraum zugeführt. Dabei kann die Klimaanlage wahlweise im Frischluftmodus (es wird Luft aus der Umgebung angesaugt, dann klimatisch aufbereitet und anschließend dem Innenraum zugeführt) oder im Umluftmodus (es erfolgt keine Luftzufuhr von außen mehr, die Luft wird aus dem Innenraum angesaugt, klimatisch behandelt und wieder in den Innenraum zurückgeführt) betrieben werden. Es sind aber auch Modi einstellbar, in denen ein Anteil von Frischluft mit einem Anteil von Umluft gemischt wird. Die Mischung wird in der Regel in einer Vorrichtung, welche im Bereich unterhalb der Windschutzscheibe angeordnet ist, durch die Stellung von Klappen realisiert, welche dabei unterschiedliche Querschnitte für einen Außenlufteinlass und den Querschnitt eines Kanals für den Umlufteilass öffnen oder verschließen.

In dem Stand der Technik ist es bekannt, dass für die Verstellung der Klappen für den Umlufteinlass und für den Außenlufteinlass jeweils ein separater Antrieb eingesetzt werden kann, wodurch beliebige Luftströme gemischt werden können. Es kann für die Verstellung der Klappen auch ein Kinematikmodul verwendet werden, welches die zu betätigenden Klappen über einen gemeinsamen Antrieb ansteuert.

Insbesondere bei höheren Geschwindigkeiten steigt der Staudruck der Außenluft im Bereich des Außenluftklappen stark an, wodurch mehr Luft durch den Außenlufteinlass in das Gehäuse tritt. Deshalb muss in diesem Fall der zugeführte Außenluftstrom über die Stellung der Außenluftklappen geeignet gedrosselt werden.

Ein weiteres Problem stellt der Eintrag von unangenehmen Gerüchen in den Innenraum dar. Es sind Schadgassensoren bekannt, welche derartige Gerüche erkennen können und über eine Verbindung mit dem Klimagerät ist davon ausgehend die Regelung der Zufuhr der Außenluft möglich. Die Klimaanlage kann dann in der automatischen Umluftsteuerung betrieben werden, welche die Frischluftzufuhr von Außen unterbindet und den Umluftmodus aktiviert. Der Umschaltvorgang ist allerdings im Fahrzeuginnenraum störend wahrnehmbar. Besonders bei der automatischen Umluftsteuerung tritt dies öfters als bei einer manuellen Umschaltung ein und wird von den Fahrzeuginsassen als unangenehm empfunden.

In der DE 38 13 116 A1 wird eine Vorrichtung zum Steuern von Luftströmen für ein Kraftfahrzeug beschrieben, welche es mit Hilfe eines Kinematikmoduls erlaubt, die Verteilung von mehreren Luftströmen einzustellen. Hierfür wird über eine Kurvenscheibe, welche direkt mit einem Antrieb verbunden ist, jeweils ein Hebelmechanismus für eine Klappe betätigt, wobei die Klappen einen Luftstrom zum Fußraum, zur Mittelebene des Fahrzeuginnenraums und in Richtung der Windschutzscheibe leiten. Die Klappen können zwischen einer geöffneten und geschlossenen Stellung schwenken, wobei eine Klappe hierfür einen Winkel von 60° überstreichen muss. Die Kurvescheibe muss dafür um 120° in einer Bewegungsrichtung gedreht werden, damit der jeweilige Hebelmechanismus die Klappen zwischen den Endstellungen verstellen kann. Dieselbe Stellung einer Klappe kann auch erreicht werden, indem die Kurvenscheibe aus der aktuellen Stellung um 240° in die entgegengesetzte Bewegungsrichtung gedreht wird. Diese Wirkungsweise führt zu einer unnötig langen Zeit, bis sich eine Klappe in der gewünschten Stellung befindet, insbesondere beim Eintritt von unangenehmen Gerüchen über die Außenluft. Dadurch wird der Komfort für die Insassen verringert.

In der gattungsgemäßen EP 0414941 wird eine weitere Vorrichtung zum Steuern von Luftströmen für ein Kraftfahrzeug beschrieben.

Die vorliegende Erfindung stellt sich die Aufgabe, eine Vorrichtung für die Verteilung und / oder zum Steuern von Luftströmen, die insbesondere für den Einsatz im Belüftungssystem von Kraftfahrzeugen vorgesehen ist, zur Verfügung zu stellen, mit der der Komfort für die Fahrzeuginsassen erhöht wird.

Diese Aufgabe wird erfindungsgemäß durch die Vorrichtung gemäß Anspruch 1 gelöst. Vorteilhafte Weiterbildungen sind Gegenstand der Unteransprüche.

Die erfindungsgemäße Vorrichtung, welche insbesondere für die Klimaanlage von Kraftfahrzeugen verwendet wird, umfasst eine Klappenanordnung mit wenigstens zwei Klappen, wobei die Klappen der Klappenanordnung zwischen einer ersten und zweiten Stellung schwenkbar sind; einem Antrieb; einem mit der Klappenanordnung gekoppelten Kinematikmodul, das durch den Antrieb in einer ersten Bewegungsrichtung bewegt werden kann und dabei die Klappen von der ersten in die zweite Stellung verschwenkt. Das Kinematikmodul kann durch den Antrieb in einer zweiten Bewegungsrichtung bewegt werden und dabei die Klappen von der zweiten in die erste Stellung verschwenken. Des weiteren umfasst die Vorrichtung ein Eingabemittel zur Eingabe einer Soll-Stellung der Klappen; ein Erfassungsmittel zur Erfassung einer Ist-Stellung der Klappen; ein Auswahlmittel zur Auswahl derjenigen von der ersten und zweiten Bewegungsrichtung, mittels der die Klappen schneller von der Ist- in die Soll-Stellung verschwenkt werden kann; und ein Steuermittel zur Ansteuerung des Antriebes derart, dass das Kinematikmodul die Klappen in der vom Auswahlmittel ausgewählten Bewegungsrichtung von der Ist- in die Soll-Stellung verschwenkt, wobei das Steuermittel ein elektronisches Bauteil ist, welches ein Signal des Auswahlmittels aufnehmen, eine elektrische Spannung und/oder eine Stromstärke verändern und über einen Ausgang abgeben kann.

Die Erfindung wird im Folgenden anhand einer besonders bevorzugten Ausführungsform beschrieben, bei der ein Kinematikmodul über eine Kurvenscheibe mit wenigstens einem Hebelmechanismus zusammenwirkt, und über die angelenkten Hebel des Hebelmechanismus die Stellung der Klappen verändert. Gleichermaßen sind auch andere kinematische Gestaltungen, insbesondere Linearführungen, parallelkinematische Gestaltungen oder dergleichen für die Verstellung der Klappen einsetzbar.

Ein Vorteil der erfindungsgemäßen Vorrichtung ist, dass insbesondere bei unangenehmer Außenluft die Zeit für das Schließen der Außenluftklappen verkürzt und der Umluftmodus schneller aktiviert werden kann. Die Vorrichtung wählt hierfür selbsttätig diejenige Bewegungsrichtung des Antriebs aus, in der eine Drehung der Kurvenscheibe in einer möglichst kurzen Zeit zu einem Schließen der Außenluftklappen führt. Dies führt zu einem Komfortgewinn für die Insassen des Fahrzeugs.

Ein Eingabemittel dient zur Vorgabe eines gewünschten Betriebsmodus der Klimaanlage oder einer gewünschten Stellung der Klappen. Dies kann bei einer manuellen Einstellung der Klappen beispielweise mit Hilfe eines Drehknopfes oder eines Schiebereglers erfolgen. Bei einer automatischen Verstellung der Klappen kann vorzugsweise die Steuerung der Klimaanlage den Antrieb ansteuern. Zusätzlich kann bei einer automatischen Umluftsteuerung ein Schadgassensor den Zustand der eintretenden Außenluft erkennen und ein Ausgabesignal an die Steuerung der Klimaanlage oder an das Auswahlmittel der Vorrichtung ausgeben.

Das Erfassungsmittel zur Erfassung einer Ist-Stellung der Klappenanordnung ist ein Mittel, welches die Stellung der Klappenanordnung entweder berührungslos oder berührend erfassen kann. Vorteilhafterweise kann es sich um einen Sensor für die Positionsermittlung handeln, welcher bevorzugt im Antrieb integriert ist oder um ein Bauteil, welches in der Steuerung der Klappenanordnung eingesetzt werden kann. Es eignen sich beispielsweise bevorzugt ein inkrementeller Winkelgeber oder magnetoresistive Winkelsensoren für die Positionsermittlung.

Ein Auswahlmittel wählt die Bewegungsrichtung, hier insbesondere die Drehrichtung, für den Antrieb, womit vorzugsweise über die Kurvenscheibe die Hebelmechanismen betätigt werden können und die Klappen die gewünschte Stellung einnehmen. In Abhängigkeit eines Soll- und einer Ist-Stellung wird eine Bewegungsrichtung, insbesondere ein Schwenkwinkel γ für den Antrieb derart ausgewählt, dass der Schwenkwinkel α der Klappen und /oder der Schwenkwinkel γ des Antriebs möglichst gering ist. Vorzugsweise kann hierfür ein Mikroprozessor eingesetzt werden.

Ein Steuermittel ist erfindungsgemäß ein elektronisches Bauteil, welches ein Signal des Auswahlmittels aufnehmen, eine elektrische Spannung und / oder eine Stromstärke verändern und über einen Ausgang abgeben kann. Das Steuermittel dient insbesondere dazu, den Antrieb derart anzusteuern, dass die Klappen von der Ist- in die Soll-Stellung in möglichst kurzer Zeit und / oder mit minimalem energetischen Aufwand verstellt werden können.

Das Kinematikmodul wird vorzugsweise in einer Vorzugsrichtung gedreht. Dabei kann der Schwenkwinkel γ des Antriebs entweder unendlich (umlaufender Antrieb) oder vorzugsweise einen maximalen Schwenkwinkel γₘₐₓ für das Einstellen der Endstellungen einer Klappe umfassen. Der Schwenkwinkel γ des Antriebs kann mit Hilfe von bekannten Maßnahmen begrenzt werden, beispielsweise mit einem Anschlag für jeweils eine Endstellung oder über die Gestaltung der Hebel des Hebelmechanismus. Die Kinematik des Kinematikmoduls wird vorzugsweise so ausgebildet, dass bei einem bestimmten Anteil des maximal möglichen Schwenkwinkels γₘₐₓ des Antriebs, insbesondere von 30% oder weniger, ein möglichst schnelles Schließen der Klappen, insbesondere der Außenluftklappen, erfolgen kann. Die Vorzugsrichtung kann derart gewählt werden, dass für eine gegebene Antriebsleistung eine möglichst geringe Verstellzeitdauer oder eine energetisch optimale Bewegung des Kinematikmoduls erzielt werden kann.

Ein Vorteil der erfindungsgemäßen Vorrichtung ist, dass es jeweils eine erste oder zweite Bewegungsrichtung für das Kinematikmodul und damit auch für die Klappen der Vorrichtung gibt, in der sich wenigstens eine Klappe in möglichst kurzer Zeit in eine gewünschte Stellung bewegen oder verschieben lässt, wodurch sich insbesondere im Umluftmodus der Komfort für die Insassen gesteigert wird, da zum einen die Verstelldauer reduziert wird und sich die Geräuschentwicklung verringert.

Die Drehachsen des Kinematikmoduls und der Klappen sind im Wesentlichen in Richtung der Längsachse des Gehäuses ausgerichtet, Abweichungen davon sind im Rahmen von weiteren Ausführungsformen möglich. Die Klappen sind vorzugsweise im Gehäuse der Vorrichtung gelagert, können aber in einer alternativen Ausführungsform auch außerhalb des Gehäuses gelagert sein. Die Drehachsen der Klappen und die Drehachse des Kinematikmoduls sind bevorzugt ortsfeste Drehachsen. Die genannten Drehachsen sind bevorzugt im Wesentlichen parallel zueinander.

In einer erfindungsgemäßen Vorrichtung umfasst ein Kinematikmodul eine Kurvenscheibe mit wenigstens einer Aussparung, welche wenigstens eine gebogene Bahn ausbildet. Das Kinematikmodul umfasst des weiteren wenigstens einen Hebelmechanismus mit jeweils wenigstens einem Hebel, welche über ein Drehgelenk zusammenwirken.

Die Hebel des Hebelmechanismus weisen an einem äußeren Ende bevorzugt jeweils einen Führungszapfen auf. Diese erstrecken sich vorzugsweise in entgegengesetzter Richtung von der Oberfläche des Hebels. In einer alternativen Ausführungsform können diese sich auch in derselbe Richtung von der Oberfläche des Hebels aus erstrecken. Die Führungszapfen sind in oder an der Kurvenscheibe in den gebogenen Bahnen geführt.

Daraus ergibt sich der Vorteil der erfindungsgemäßen Vorrichtung, dass die Vielzahl von Klappen mit Hilfe eines einzigen Antriebs über das Kinematikmodul verstellt werden können, wodurch sich das Gewicht und die Anzahl der Teile für die Vorrichtung verringern lässt. Dadurch wird auch der Aufwand für die Ansteuerung der Antriebe verringert. Des weiteren lassen sich sämtliche Stellungen der Klappen in den unterschiedlichen Betriebsmodi mit nur einem Kinematikmodul einstellen.

In einer erfindungsgemäßen Vorrichtung ist wenigstens eine Klappe eine Umluftklappe, welche einen Eintrittsquerschnitt für den Umluftstrom frei gibt oder verschließt. Diese ist bevorzugt im Wesentlichen in Form eines Segments eines Zylinders ausgebildet, wobei dieser eine Vielzahl von Aussparungen in seiner Wandung aufweist.

Wenigstens eine Klappe ist eine Außenluftklappe, welche einen Eintrittsquerschnitt für einen Außenluftstrom frei gibt oder verschließt. Die Außenluftklappe ist insbesondere eine Drosselklappe, wodurch die Anzahl der beweglichen Teile gering und eine kostengünstige Herstellung möglich ist.

Eine erfindungsgemäße Vorrichtung kann mit einer automatischen Umluftsteuerung oder mit einer manuellen Umschaltung zwischen Umluft und Frischluft betrieben werden. Bei einer automatischen Umluftsteuerung dient vorzugsweise ein Schadgassensor zur Erkennung des Zustands des Außenluftstroms. Dieser kann mit der Steuerung des Klimageräts oder dem Auswahlmittel verbunden sind, wodurch vorteilhafterweise die Zeit für das Schließen der Außenluftklappen verringert werden kann.

Nach einem erfindungsgemäßen Steuerungsverfahren kann eine Vorrichtung zum Steuern von Luftströmen, wie sie vorstehend beschrieben wurde, mit einem erhöhten Komfort für die Insassen bereit gestellt werden. Durch die verringerte Zeit für das Bewegen einer Klappe in eine Soll-Stellung wird der Komfort gesteigert, insbesondere bei unangenehmer Außenluft, und die Geräuschentwicklung im Innenraum kann während des Verstellvorgangs verringert werden.

Weitere Vorteile, Merkmale und Anwendungsmögiichkeiten der vorliegenden Erfindung ergeben sich aus der nachfolgenden Beschreibung in Zusammenhang mit den Figuren. Es zeigt:
Fig. 1 eine perspektivische Ansicht einer Vorrichtung nach einer Ausführungsform der vorliegenden Erfindung,
Fig. 2 eine Darstellung für den Verlauf des Klappenöffnungswinkel α bei unterschiedlichen Betriebsarten einer Klimaanlage,
Fig. 3 eine Schnittansicht der Vorrichtung gemäß Fig. 1, in der sich die Vorrichtung in der Betriebsart "Umtuft" befindet,
Fig. 4 eine Schnittansicht der Vorrichtung gemäß Fig. 3, in der sich die Vorrichtung in der Betriebsart "Frischluft" befindet,
Fig. 5 eine Schnittansicht der Vorrichtung gemäß Fig. 3, in der sich die Vorrichtung in der Betriebsart "Teilumluft" befindet und
Fig. 6 eine Schnittansicht der Vorrichtung gemäß Fig. 3, in der sich die Vorrichtung in der Betriebsart "Teilfrischluft" befindet.

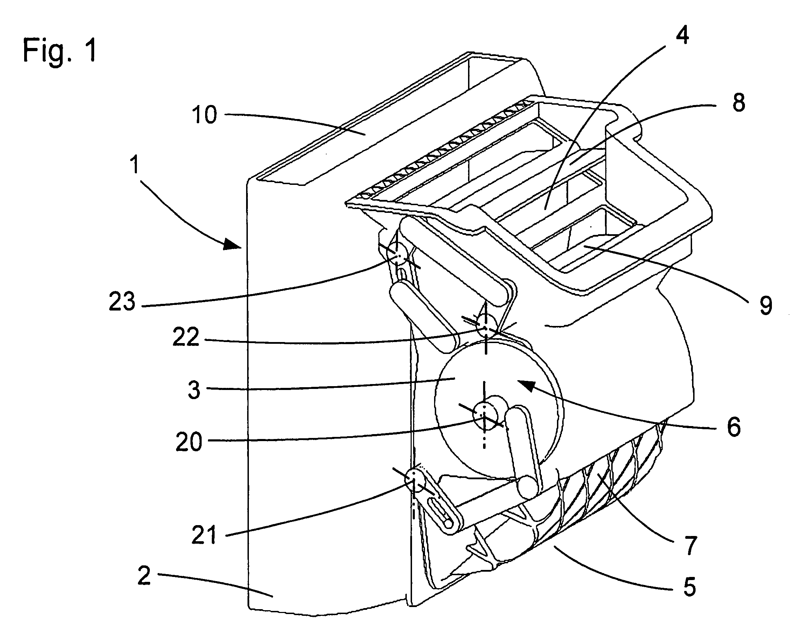

Fig. 1 zeigt eine perspektivische Ansicht einer Vorrichtung nach einer Ausführungsform der vorliegenden Erfindung. Ein Gehäuse 2 weist einen Einlasskanal 4 mit einem Einlassquerschnitt für die Zufuhr von Außenluft und einen Einlass 5 für die Zufuhr eines Luftstroms, insbesondere bei Umluftbetrieb, aus dem Innenraum des Fahrzeugs auf. Des weiteren weist das Gehäuse 2 eine Öffnung 10 für den Ein- und Ausbau eines Filters (nicht dargestellt) auf. Im Bereich des Einlasskanals 4 für den Außenluftstrom sind zwei Außenluftklappen 8, 9 angeordnet, welche im Gehäuse 2 über eine feste Drehachse 23, 22 gelagert sind. Die Außenluftklappen 8, 9 sind jeweils in Form von Drosselklappen ausgebildet. Im Bereich des Einlass 5 für den Umluftstrom ist eine Umluftklappe 7 angeordnet, welche über eine feste Drehachse 21 ebenfalls im Gehäuse gelagert ist. Die Umluftklappe 7 ist in Form eines Segments eines Zylinders ausgebildet.

Zwischen den Klappen 7, 8, 9 ist ein Kinematikmodul 6 angeordnet, welches über eine feste Drehachse 20 im Gehäuse 2 gelagert ist. Das Kinematikmodul 6 wird von einem Antrieb (nicht dargestellt) bewegt und umfasst eine Kurvenscheibe 3, sowie zwei Hebelmechanismen, welche sowohl mit den Klappen 7, 8, 9 als auch mit der Kurvenscheibe 3 derart zusammenwirken, dass die Stellung der Klappen 7, 8, 9 bei einer Drehung des Kinematikmoduls 6 verändert wird. In der Kurvenscheibe 3 sind jeweils auf einer Seite im Wesentlichen bogenförmige Bahnen 50, 51 (nicht dargestellt) ausgebildet.

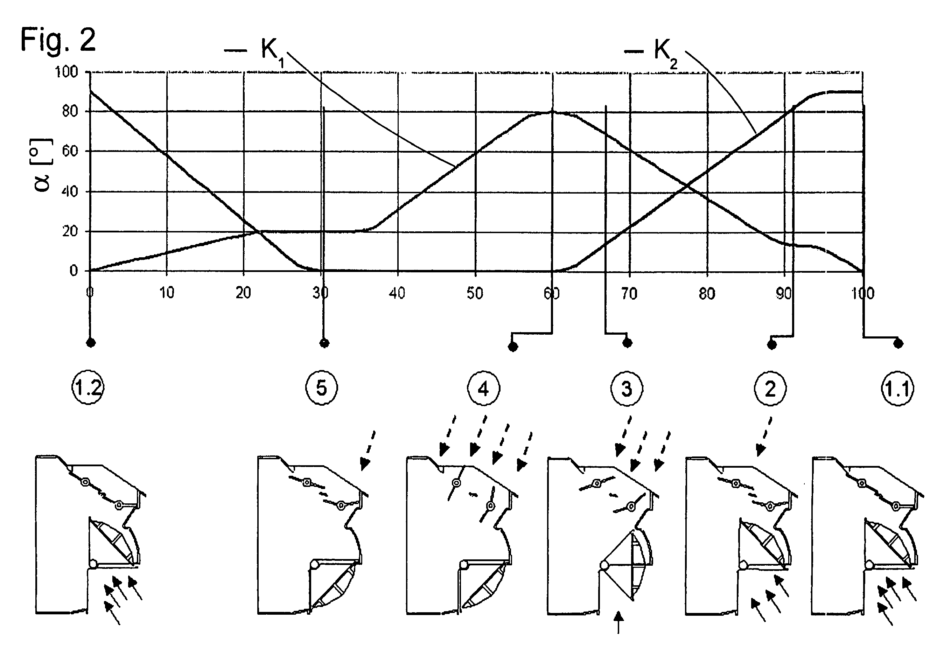

Fig. 2 zeigt eine Darstellung für den Verlauf des Schwenkwinkels α für die Außenluftklappen 8, 9 und für die Umluftklappe 7 bei unterschiedlichen Betriebsarten einer Klimaanlage mit einer Vorrichtung zum Steuern von Luftströmen gemäß der vorliegenden Erfindung. Die Umluftklappe 7 führt eine Schwenkbewegung gemäß der Kurve K₂ um die Drehachse 21 aus, während die Außenluftklappen 8, 9 eine Schwenkbewegung gemäß der Kurve K₁ um die Drehachsen 22, 23 ausführen. Die Abszisse des Diagramms zeigt in Prozent den Anteil des aktuellen Schwenkwinkels g des Antriebs vom maximal möglichen Schwenkwinkel γₘₐₓ des Antriebs. Die Ordinate des Diagramms zeigt den zugehörigen Schwenkwinkel α für die Klappen 7, 8, 9 in Abhängigkeit vom aktuellen Schwenkwinkel γ des Antriebs. Im unteren Bereich von Fig. 2 sind in einer Schnittansicht für ausgewählte Stellungen des aktuellen Schwenkwinkels γ des Antriebs die zugehörigen Stellungen der Klappen 7, 8, 9 und des Kinematikmoduls 6 dargestellt. Des weiteren wird zusätzlich die Richtung und Stärke der eintretenden Luft mit Hilfe von Pfeilen visualisiert.

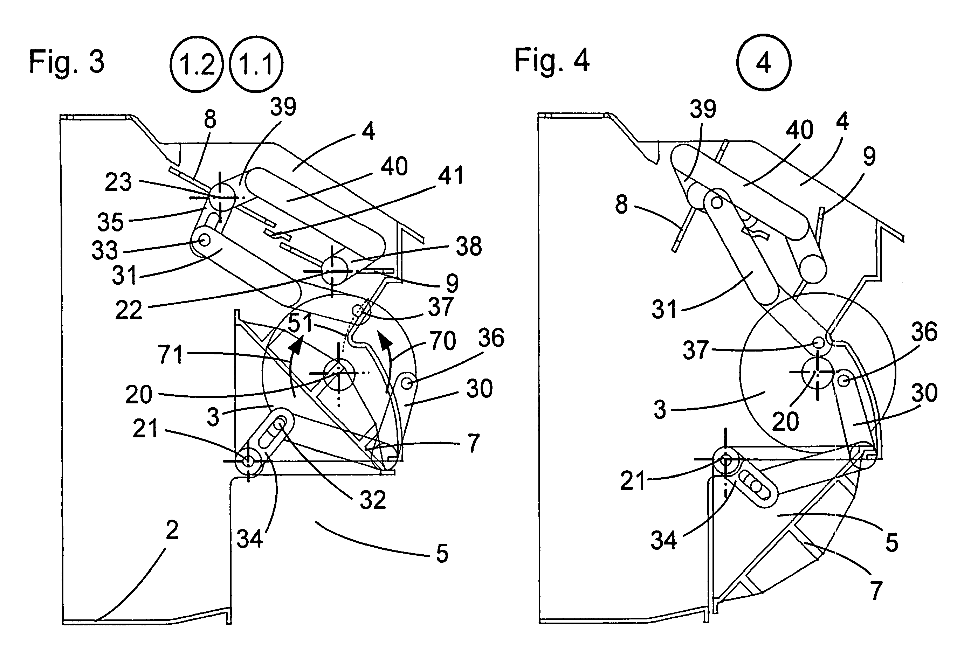

In Fig. 3 ist eine Schnittansicht der bevorzugten Ausführungsform gemäß Figur 1, bei der die Vorrichtung die Stellung der Klappen 7, 8, 9 gemäß der Betriebsart "Umluft" eingestellt hat, so dass eine schnelle Abkühlung des Fahrzeuginnenraums erreicht werden kann. Dieselbe Stellung der Klappen ist auch für den Fall erforderlich, wenn unangenehme Gerüche im Außenluftkanal entdeckt werden. Der Eintrittsquerschnitt des Umlufteinlass 5 ist vollständig freigegeben. Die Umluftklappe 7 befindet sich in einer Endstellung. Die Außenluftklappen 8, 9 sind ebenfalls in einer Endstellung, bei der Einlassquerschnitt des Einlasskanals 4 verschlossen wird. Zwischen den Außenluftklappen ist ein Steg 41, welcher sich entlang der Längsachse der Klappen 8, 9 erstreckt und den zwischenliegenden Querschnitt des Kanals 4 verschließt.

Ein erster Hebelmechanismus umfasst einen ersten Langhebel 31 und einen ersten Klappenhebel 35, welche über ein Langloch im ersten Klappenhebel 35 und einem Führungszapfen 33 im ersten Langhebel 31 ein Drehgelenk ausbilden. Die Kurvenscheibe 3 nimmt in der gebogenen Bahn 51 (schematisch dargestellt) einen Führungszapfen 37 auf, welcher sich von einem äußeren Ende des ersten Langhebels 31 von dessen Oberfläche erstreckt. Ein zweiter Hebelmechanismus umfasst einen zweiten Langhebel 30 und einen zweiten Klappenhebel 34, welche über ein Langloch im zweiten Klappenhebel 34 und einem Führungszapfen 32 im ersten Langhebel 30 ein Drehgelenk ausbilden. Die Kurvenscheibe 3 nimmt in der gebogenen Bahn 50 (nicht dargestellt) einen Führungszapfen 36 auf, welcher sich von einem äußeren Ende des zweiten Langhebels 30 von dessen Oberfläche erstreckt. Die Führungszapfen 36, 37 wirken in der Kurvenscheibe 3 mit den jeweiligen gebogenen Bahnen 50, 51 zusammen und werden darin geführt. Je nach Drehrichtung des Kinematikmoduls 6 werden die Führungszapfen 36, 37 in radialer Richtung entlang der gebogenen Bahnen 50, 51 von der Kurvenscheibe 3 nach außen oder nach innen geführt. Die Führungszapfen 32, 33 wirken über ein Langloch in den Klappenhebeln 34, 35 zusammen und verändern die Stellung der angeschlossenen Klappen 7, 8, 9. Die Umluftklappe 7 wird dabei um die Drehachse 21 geschwenkt, die Außenluftklappen 8, 9 um die Drehachsen 23, 22. Die Außenluftklappen 8, 9 sind über einen Hebel 40 miteinander verbunden, so dass die Stellung der Außenluftklappe 9 immer entsprechend der Stellung der Außenluftklappe 8 ist.

Das Kinematikmodul 6 kann über den Antrieb (nicht dargestellt) in eine erste Drehrichtung 70 oder in eine zweite Drehrichtung 71 um die Drehachse 20 verschwenkt werden.

Fig. 4 zeigt eine Schnittansicht der Vorrichtung gemäß Fig. 3, in der sich die Vorrichtung in der Betriebsart "Frischluft" befindet. Hierbei wird eine möglichst große Zufuhr von Außenluft in die Vorrichtung angestrebt. Die Umluftklappe 7 verschließt dabei den Umlufteinlass 5 vollständig und die Außenluftklappen 8, 9 befinden sich in einer Endstellung, bei der Eintrittsquerschnitt des Außenluftstroms durch den Bereich der Außenluftklappen 8, 9 maximal ist und der Schwenkwinkel α der Außenluftklappen 8, 9 80° beträgt. Die Umluftklappe 7 befindet sich ebenfalls in einer Endstellung, wobei der Schwenkwinkel α für die Umluftklappe 0° beträgt. Die Stellung der Klappen für die Betriebsart "Umluft" (siehe Fig. 3) kann aus dieser Stellung in einer ersten Drehrichtung 70 oder einer zweiten Drehrichtung 71 mit einem ersten Schwenkwinkel γ₁ des Antriebs oder einen zweiten Schwenkwinkel γ₂ des Antriebs erreicht werden. Gemäß der Darstellung des Diagramm aus Fig. 2 ist die Stellung 1.1 für eine Drehrichtung, welche der rechten Seite von Kurven K₂ von Stellung 4 aus folgt, in einer kürzeren Zeit in der Soll-Stellung als eine Drehrichtung gemäß der linken Seite von K₂. Es gibt immer eine Drehrichtung des Antriebs, in der eine gewünschte Stellung der Klappen in einer kürzen Zeit erreicht werden kann.

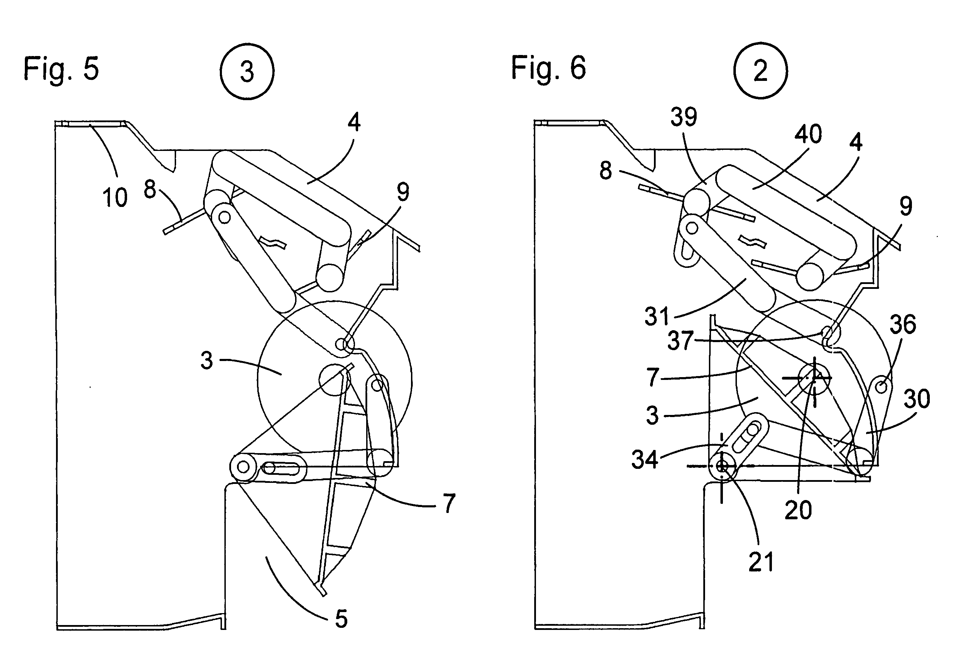

Fig. 5 zeigt eine Schnittansicht der Vorrichtung gemäß Fig. 3, in der sich die Vorrichtung in der Betriebsart "Teilumluft" befindet. Hier wird ein Außenluftstrom und ein Umluftstrom in der Vorrichtung zusammengeführt, gemischt und an die Klimaanlage abgegeben. Die Außenluftklappen 8, 9 sind teilweise verschwenkt, so dass nur ein Teil des Durchtrittsquerschnitts der Außenluftklappen geöffnet ist. Die Umluftklappe 7 gibt ebenfalls nur einen Teil des Umlufteinlass 5 frei. Dieser Modus erlaubt eine Reduzierung des Kraftstoffverbrauchs der Klimaanlage, da hierbei ein thermisch besonders vorteilhafter Mischluftzustand der Klimaanlage zugeführt werden kann, wodurch die zugeführte elektrische Energie für das Heizgerät reduziert werden kann. Wie man aus der Zusammenschau der Fig. 5 und Fig. 3 sieht, gibt es gemäß des Diagramms auf Fig. 2 eine vorteilhafte Drehrichtung für den Antrieb, für die aus der Betriebsart "Teilumluft" die Betriebsart "Umluft" (Fig. 3) für einen möglichst kleinen Schwenkwinkel γ bei einer möglichst kurzen Zeit für das Erreichen dieser Stellung erzielt werden kann.

In Fig. 6 ist eine Schnittansicht der Vorrichtung gemäß Fig. 3 dargestellt, in der sich die Vorrichtung in der Betriebsart "Teilfrischluft" befindet. Die Außenluftklappen 8, 9 sind leicht geöffnet, die Umluftklappe 7 ist vollständig geöffnet. Somit wird zum Umluftstrom noch ein geringer Außenluftstrom beigemischt. Dadurch kann ein Luftaustausch im Innenraum des Fahrzeugs stattfinden, ohne die Temperatur im Innenraum nennenswert zu Verändern, besonders für den Fall, dass der Außenluftstrom eine höhere Temperatur als der Umluftstrom aufweist. Bei einer Verstellung der Klappen gemäß der Stellung von Fig. 6 nach der Stellung von Fig. 4 kann ein möglichst leises Umschalten der Betriebsarten erreicht werden.

## Patentansprüche

1. Vorrichtung zum Steuern von Luftströmen, insbesondere für die Klimaanlage von Kraftfahrzeugen, mit
einer Klappenanordnung mit wenigstens zwei Klappen (7, 8, 9), wobei die Klappen der Klappenanordnung zwischen einer ersten und zweiten Stellung schwenkbar sind;
einem Antrieb;
einem mit der Klappenanordnung gekoppelten Kinematikmodul (6), das durch den Antrieb In einer ersten Bewegungsrichtung bewegt werden kann und dabei die Klappen von der ersten in die zweite Stellung verschwenkt, und das durch den Antrieb in einer zweiten Bewegungsrichtung bewegt werden kann und dabei die Klappen von der zweiten in die erste Stellung verschwenkt, wobei die Vorrichtung umfasst:
ein Eingabemittel zur Eingabe einer Soll-Stellung der Klappen;
ein Erfassungsmittel zur Erfassung einer Ist-Stellung der Klappen;
ein Auswahlmittel zur Auswahl derjenigen von der ersten und zweiten Bewegungsrichtung, mittels der die Klappen schneller von der Ist- in die Soll-Stellung verschwenkt werden können; und
ein Steuermittel zur Ansteuerung des Antriebs derart, dass das Kinematikmodul (6) die Klappen in der vom Auswahlmittel ausgewählten Bewegungsrichtung von der Ist- in die Sollstellung verschwenkt, wobei das Steuermittel ein elektronisches Bauteil ist, welches ein Signal des Auswahlmittels aufnehmen, eine elektrische Spannung und/oder eine Stromstärke verändern und über einen Ausgang abgeben kann.

2. Vorrichtung gemäß Anspruch 1, **dadurch gekennzeichnet, dass** ein Kinematikmodul (6) wenigstens einen Hebelmechanismus mit jeweils wenigstens einem Hebel (30, 34, 31, 35) umfasst, welche über ein Drehgelenk zusammenwirken.

3. Vorrichtung gemäß Anspruch 2, **dadurch gekennzeichnet, dass** ein Kinematikmodul (6) eine Kurvenscheibe (3) mit Aussparungen umfasst, und wenigstens eine gebogene Bahn (50, 51) ausbildet.

4. Vorrichtung gemäß einem der vorherigen Ansprüche, **dadurch gekennzeichnet, dass** die Klappen (7, 8, 9) in einem Gehäuse (2) um jeweils eine feste Drehachse (21, 22, 23) gelagert sind.

5. Vorrichtung gemäß einem der vorherigen Ansprüche, **dadurch gekennzeichnet, dass** die Drehachse (20) des Kinematikmoduls und die Drehachsen (21, 22, 23) der Klappen im Wesentlichen zueinander parallel sind..

6. Vorrichtung gemäß einem der vorherigen Ansprüche, **dadurch gekennzeichnet, dass** die Klappen (7, 8, 9) in der ersten und / oder zweiten Bewegungsrichtung bis zu einem maximalen Winkel verschwenkt werden können.

7. Vorrichtung gemäß einem der vorherigen Ansprüche, **dadurch gekennzeichnet, dass** wenigstens eine Klappe (7) eine Umluftklappe ist.

8. Vorrichtung gemäß einem der vorherigen Ansprüche, **dadurch gekennzeichnet, dass** wenigstens eine Klappe (8, 9) eine Außenluftklappe (8, 9), und insbesondere eine Drosselklappe ist.

9. Vorrichtung gemäß einem der vorherigen Ansprüche, **dadurch gekennzeichnet, dass** diese mit einer automatischen Umluftsteuerung oder mit einer manuellen Umschaltung zwischen Umluft und Frischluft betrieben werden kann.

10. Vorrichtung gemäß einem der vorherigen Ansprüche, **dadurch gekennzeichnet, dass** ein Schadgassensor den Zustand eines Luftstroms erfasst, wobei dieser mit einer Steuerung eines Klimageräts oder einem Auswahlmittel verbunden ist.

## Claims

1. A device for controlling air flows, in particular for the air conditioning system of motor vehicles, with a flap arrangement having at least two flaps (7, 8, 9), wherein the flaps of the flap arrangement are pivotable between a first and a second position;
a drive; and a kinematic module (6), which is coupled to the flap arrangement, can be moved by the drive in a first movement direction and, in so doing, pivots the flaps from the first into the second position, and which can be moved by the drive in a second movement direction and, in so doing, pivots the flaps from the second into the first position, wherein
the device comprises:
an input means for inputting a target position of the flaps;
a detection means for detecting an actual position of the flaps;
a selection means for selecting whichever of the first and second movement direction can be used to pivot the flaps more quickly from the actual position into the target position; and
a control means for actuating the drive in such a way that the kinematic module (6) pivots the flaps from the actual position into the target position in the movement direction selected by the selection means, wherein the control means is an electronic component, which can receive a signal of the selection means, can change an electrical voltage and/or an amperage, and can deliver via an output.

2. The device according to claim 1, **characterised in that** a kinematic module (6) comprises at least one lever mechanism, in each case with at least one lever (30, 34, 31, 35), which cooperate via a swivel joint.

3. The device according to claim 2, **characterised in that** a kinematic module (6) comprises a cam disc (3) with cut-outs, and forms at least one curved track (50, 51).

4. The device according to one of the preceding claims, **characterised in that** the flaps (7, 8, 9) are mounted in a housing (2), in each case about a fixed rotation spindle (21, 22, 23).

5. The device according to one of the preceding claims, **characterised in that** the rotation spindle (20) of the kinematic module and the rotation spindles (21, 22, 23) of the flaps are substantially parallel to one another.

6. The device according to one of the preceding claims, **characterised in that** the flaps (7, 8, 9) can be pivoted in the first and/or second movement direction as far as a maximum angle.

7. The device according to one of the preceding claims, **characterised in that** at least one flap (7) is a recirculated air flap.

8. The device according to one of the preceding claims, **characterised in that** at least one flap (8, 9) is an outside air flap (8, 9), and in particular is a throttle flap.

9. The device according to one of the preceding claims, **characterised in that** it can be operated with automatic recirculated air control, or by manually switching between recirculated air and fresh air.

10. The device according to one of the preceding claims, **characterised in that** a noxious gas sensor detects the condition of an air flow, wherein said sensor is connected to a control unit of an air conditioning system or to a selection means.

## Revendications

1. Dispositif de commande de flux d'air, en particulier pour le système de climatisation de véhicules à moteur, comprenant un agencement de volets comportant au moins deux volets (7, 8, 9), où les volets de l'agencement de volets peuvent pivoter entre une première et une deuxième position; un entraînement; un module de cinématique (6) couplé à l'agencement de volets, module de cinématique qui peut être déplacé, par l'entraînement, dans une première direction de mouvement et, ce faisant, bascule les volets passant de la première à la deuxième position, et qui peut être déplacé, par l'entraînement, dans une deuxième direction de mouvement et, ce faisant, bascule les volets passant de la deuxième à la première position, où le dispositif comprend un moyen d'entrée servant à l'entrée d'une position théorique des volets; un moyen de détection servant à la détection d'une position réelle des volets; un moyen de sélection servant à la sélection de la première et de la deuxième direction de mouvement, celle au moyen de laquelle les volets peuvent être basculés plus rapidement, passant de la position réelle à la position théorique; et un moyen de commande servant à la commande de l'entraînement, de manière telle que le module de cinématique (6) bascule les volets dans la direction de mouvement sélectionnée par le moyen de sélection, lesdits volets passant de la position réelle à la position théorique, où le moyen de commande est un composant électronique qui peut recevoir un signal du moyen de sélection, modifier et fournir, par une sortie, une tension électrique et/ou une intensité de courant.

2. Dispositif selon la revendication 1, **caractérisé en ce qu'**un module de cinématique (6) comprend au moins un mécanisme à levier comportant à chaque fois au moins un levier (30, 34, 31, 35), leviers qui fonctionnent ensemble au moyen d'une articulation tournante.

3. Dispositif selon la revendication 2, **caractérisé en ce qu'**un module de cinématique (6) comprend une came (3) comportant des évidements et forme au moins une piste courbe (50, 51).

4. Dispositif selon l'une quelconque des revendications précédentes, **caractérisé en ce que** les volets (7, 8, 9) sont logés dans un boîtier (2) autour respectivement d'un axe de rotation fixe (21, 22, 23).

5. Dispositif selon l'une quelconque des revendications précédentes, **caractérisé en ce que** l'axe de rotation (20) du module de cinématique et les axes de rotation (21, 22, 23) des volets sont pratiquement parallèles les uns par rapport aux autres.

6. Dispositif selon l'une quelconque des revendications précédentes, **caractérisé en ce que** les volets (7, 8, 9) peuvent, dans la première et/ou dans la deuxième direction de mouvement, être basculés jusqu'à un angle maximum.

7. Dispositif selon l'une quelconque des revendications précédentes, **caractérisé en ce qu'**au moins un volet (7) est un volet d'air recyclé.

8. Dispositif selon l'une quelconque des revendications précédentes, **caractérisé en ce qu'**au moins un volet (8, 9) est un volet d'air extérieur (8, 9) et, en particulier, un papillon des gaz.

9. Dispositif selon l'une quelconque des revendications précédentes, **caractérisé en ce que** ce dispositif peut être actionné avec une commande automatique d'air recyclé ou avec une commande manuelle permettant de passer en mode air recyclé ou en mode air frais.

10. Dispositif selon l'une quelconque des revendications précédentes, **caractérisé en ce qu'**un capteur de gaz polluants détecte l'état d'un flux d'air, où ce capteur de gaz polluants est connecté à une commande d'un climatiseur ou à un moyen de sélection.
